# EUROPEAN PATENT APPLICATION

(11) **EP 2 787 476 A1**
(43) Date of publication of application: **08.10.2014**
(21) Application number: 12854004.4
(22) Date of filing: 30.11.2012
(51) Int. Cl.: G06Q 20/40, G06Q 20/16

(54) **METHOD AND SYSTEM FOR SAFE MOBILE WALLET TRANSACTION**

(30) Priority: 01.12.2011 US 201161565742 P
(71) Applicant: SK C&C Co., Ltd., Seongnam-si, Gyeonggi-do 463-844 (KR)
(72) Inventor: BACASTOW, Steve, Cumming Georgia 30041 (US)
(74) Representative: Walaski, Jan Filip
(86) International application number: PCT/KR2012/010324
(87) International publication number: WO 2013/081421

(57) **Abstract**

Provided is a system and method for reducing fraud related to payment using a mobile application. A method for a mobile transaction enables a server of a third party rather than a merchant and a consumer, to verify whether the consumer of the mobile transaction is valid or not in response to a verification request related to the mobile transaction. Accordingly, since the third party can verify whether the consumer of the mobile transaction and an application for purchasing are valid or not, verification reliability with respect to a mobile payment can be improved and thus damage caused by payment fraud can be remarkably reduced.

## Description

### Technical Field

The present invention relates to a system and method for securely performing a remote wallet transaction and a remote payment transaction by using a mobile terminal.

### Background Art

The current remote payment relies primarily on mobile applications and mobile web interfaces provided by merchants. Such an interface directly connects consumers to the merchant's online shopping site and requires the consumer to access the merchant's online shopping mall site and input credentials. However, since the online merchant incompletely verifies the consumer or mobile terminal, a significant amount of mobile payment fraud exists.

In addition to the mobile applications and the mobile web interfaces provided by the merchants, a third party remote wallet is emerging as alternatives for consumers and merchants. Such a third party remote wallet provides a mobile user interface to consumers while streamlining security login, storage, and check out processes. Despite the advantages, the third party remote wallet is slowly being adopted due to pre-integration with merchants' ecommerce sites and a lack of consumer awareness.

According to current credit card industry statistics, online commerce accounts for less than 10% of all credit card transactions and over 70% of all credit card fraud.

This means that neither the interface provided by the merchants nor the third party remote wallet fully address this credit card fraud problem. Accordingly, there is a need for an improved method and system for accomplishing remote mobile commerce transactions that reduce payment fraud.

### Disclosure

### Technical Problem

One or more exemplary embodiments provide a method and system for reducing payment fraud in connection with online mobile wallet payment transactions.

One or more exemplary embodiments also provide a method and system for a mobile transaction, in which a third party rather than a merchant and a consumer, which are persons or companies directly involved in a mobile transaction, verifies whether a consumer side of the mobile transaction is valid or not.

### Technical Solution

According to an aspect of an exemplary embodiment, there is provided a method for a mobile transaction, the method including: receiving, by a server of a third party rather than a merchant and a consumer, a verification request related to the mobile transaction; verifying, by the server, whether the consumer of the mobile transaction is valid or not; and transmitting, by the server, a result of the verifying.

The receiving may include receiving the verification request from a payment server which processes a payment of the mobile transaction, the verifying may be performed during the payment process of the mobile transaction, and the transmitting may include transmitting the result of the verifying to the payment server.

The verifying may include: receiving a PIN which is input by the consumer through a mobile terminal of the consumers; and verifying whether the consumer is valid or not based on whether the PIN input by the consumer is matched with a PIN registered for the mobile terminal.

The receiving may include receiving, from a server of the merchant, a verification request regarding an application which is installed in a mobile terminal of the consumer which will make the payment of the mobile transaction, the verifying may be performed prior to the mobile transaction being started, and the transmitting may include transmitting the result of the verifying to the server of the merchant.

The verifying may include verifying whether the application is validly downloaded and installed.

The verifying may include verifying whether the application is validly downloaded from the verification server and installed.

The verifying may include verifying whether the application is validly downloaded and installed based on whether a token transmitted from the application to the server of the merchant is matched with a token registered for the application.

The token registered for the application may be registered while the application is downloaded and installed.

The mobile transaction may be a transaction to make a payment in an online transaction by using a mobile payment means.

According to an aspect of another exemplary embodiment, there is provided a verification server for verifying a mobile transaction, the verification server including: a communication interface configured to receive a verification request related to a mobile transaction; and a processor configured to verify whether a consumer of the mobile transaction is valid or not and transmit a result of the verifying via the communication interface, wherein the verification server is managed by a third party rather than a merchant and a consumer.

The verification server may be a server which provides a mobile terminal of the consumer with an application used for paying in the mobile transaction.

### Advantageous Effects

According to exemplary embodiments as described above, a third party rather than a merchant and a consumer, which are persons or companies directly involved in a mobile transaction, verifies whether the consumer of the mobile transaction and an application for purchasing are valid or not. Therefore, verification reliability with respect to a mobile payment can be improved and thus damage caused by payment fraud can be remarkably reduced.

### Description of Drawings

FIG. 1 is a view illustrating a mobile transaction system to which the present invention is applicable;
FIG. 2 is a view to illustrate a method for verifying a mobile transaction according to an exemplary embodiment of the present invention;
FIG. 3 is a view to illustrate a method for verifying a mobile transaction according to another exemplary embodiment of the present invention;
FIG. 4 is a block diagram of a mobile terminal shown in FIG. 1; and
FIG. 5 is a block diagram of a verification server shown in FIG. 1.

### Best Mode

The present invention presents solutions to the above-described limitations and requirements by providing various approaches on a system and method for allowing a reliable mobile wallet transaction.

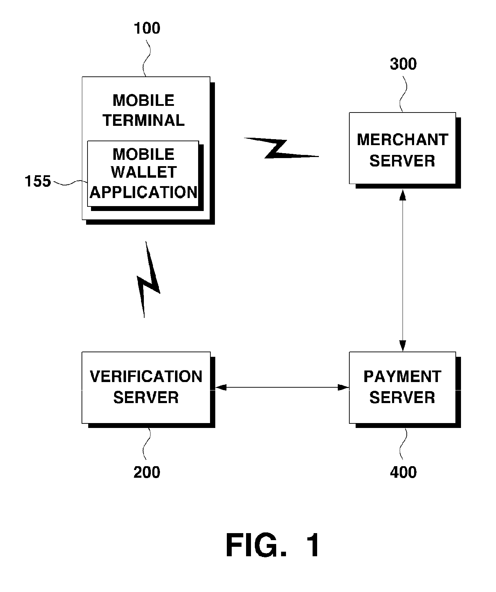

FIG. 1 is a view illustrating a mobile transaction system to which the present invention is applicable. The mobile transaction recited herein refers to purchasing goods/services on an online shopping mall and paying for the goods/services by using a mobile payment means such as a mobile wallet.

The mobile transaction system to which the present invention is applicable includes a mobile terminal 100, a verification server 200, a merchant server 300, and a payment server 400 as shown in FIG. 1.

The mobile terminal 100 is a terminal which is owned/carried by a consumer and in which a mobile wallet application 155 for paying for the goods/services purchased on the online shopping mall is installed.

The merchant server 300 is a server which manages a merchant's online shopping mall, and the payment server 400 is a server of a credit card company for processing a payment by a mobile wallet.

The verification server 200 is a server which is managed by a third party rather than the merchant and the consumer, which are persons or companies directly involved in a mobile transaction, and is a server for verifying whether the consumer conducting the mobile transaction is a valid consumer or not, and verifying whether the mobile wallet application 155 used in the mobile transaction is validly downloaded and installed.

Specifically, the verification server 200 performs a verification procedure for the mobile wallet application 155 prior to the goods/services being purchased (prior to shopping), and performs a verification procedure for the consumer during the payment process for the goods/services, so that the mobile transaction can be accomplished more securely.

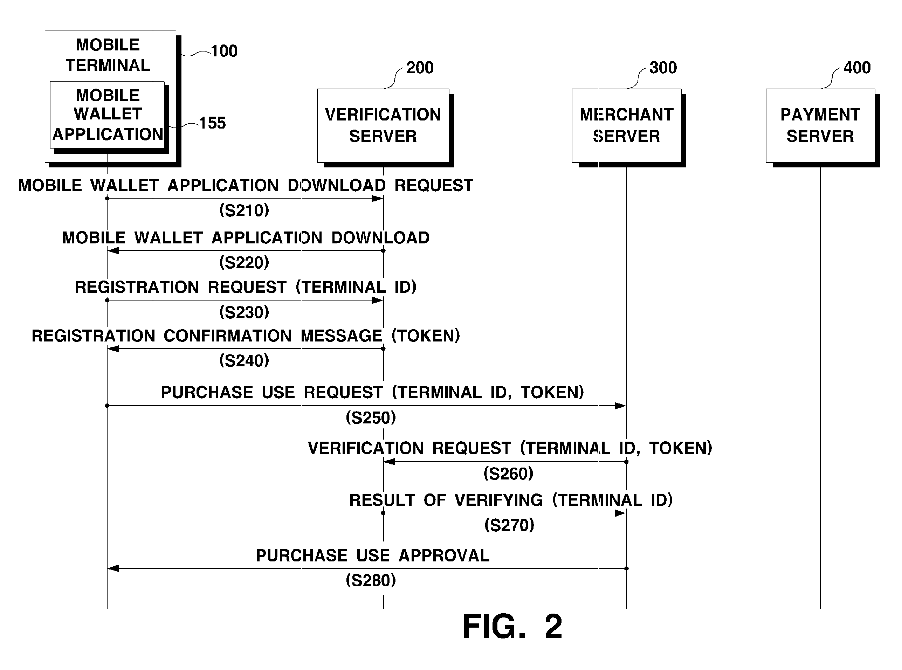

Hereinafter, a process in which the verification server 200 verifies the mobile wallet application 155 prior to goods/service being purchased (prior to shopping) will be explained in detail with reference to FIG. 2. FIG. 2 is a view to illustrate a method for verifying a mobile transaction according to an exemplary embodiment of the present invention.

The verifying process in the exemplary embodiment is a procedure for verifying whether the mobile wallet application 155 is downloaded from a reliable thing. The reliable thing herein refers to the verification server 200.

As shown in FIG. 2, the mobile terminal 100 requests a mobile wallet application download from the verification server 200 (S210), and downloads the mobile wallet application 155 and installs the same (S220).

Thereafter, the mobile wallet application 155 installed in the mobile terminal 100 transmits a registration request to the verification server 200 (S230). The registration request includes a unique identifier (ID) related to the mobile terminal 100 (hereinafter, referred to as a terminal ID). The terminal ID is an ID which is related to the mobile terminal 100 or a Secure Element (SE) inserted/embedded in the mobile terminal 100, and includes a Mobile Subscriber Integrated Services Digital Network-Number (MSISDN), a International Mobile Equipment Identity (IMEI), a Card Product Life Cycle (CPLC), etc.

Then, the verification server 200 registers the mobile wallet application 155 installed in the mobile terminal 100 and transmits a registration confirmation message (S240). The registration confirmation message includes a token.

The token is generated by the verification server 200 using the terminal ID which is included in the registration request received in operation S230, and other secret information. The secret information may be information which is received from the mobile wallet application 155 along with the terminal ID or may be information which is owned or generated by the verification server 200.

In operation S240, the verification server 200 registers the mobile wallet application 155 by matching and storing the unique ID of the mobile terminal 100 and the token in its own database (DB).

The mobile wallet application 155 registered at the verification server 200 transmits a purchase use request to the merchant server 300 (S250). The purchase use request is a request for an approval to pay for the goods/services purchased on the online shopping mall provided by the verification server 200 by using the mobile wallet application 155.

The purchase use request transmitted in operation S250 includes the terminal ID and the token. The terminal ID is the terminal ID of the mobile terminal 100 which is used for registering the mobile wallet application 155, and the token is the token which is included the registration confirmation message received in operation S240.

The merchant server 300 which has received the purchase use request transmits a verification request for the mobile wallet application 155 to the verification server 200 (S260). The verification request transmitted in operation S260 includes the terminal ID and the token received in operation 250.

In response to the verification request, the verification server 200 transmits a result of verifying to the merchant server 300 (S270). The result of the verifying transmitted from the verification server 200 to the merchant server 300 in operation S270 includes the terminal ID.

In operation S270, the mobile wallet application 155 is verified by searching a token matched with the terminal ID included in the verification request from the DB, in which the terminal IDs and the tokens are matched with each other one to one, and determining whether the token included in the verification request received in operation S260 is identical to the token searched from the DB.

When the result of the verifying received in operation S270 indicates a verification success (when the token included in the verification request received in operation S260 is identical to the token matched with the terminal ID included in the verification request), the merchant server 300 transmits a purchase use approval response to the mobile wallet application 155 in response to the purchase use request in operation S250 (S280)

Accordingly, the mobile wallet application 155 can pay for the goods/services purchased on the online shopping mall provided by the verification server 200.

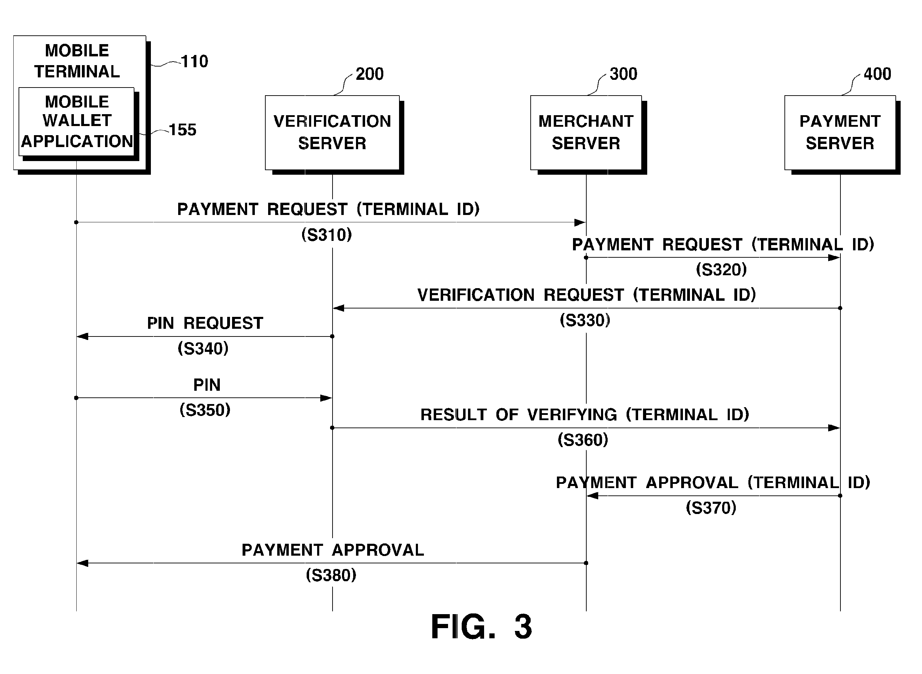

Hereinafter, a process in which the verification server 200 verifies the consumer during the payment process after the consumer purchases the goods/services will be explained with reference to FIG. 3. FIG. 3 is a view to illustrate a method for verifying a mobile transaction according to another exemplary embodiment of the present invention.

The verifying process in the present exemplary embodiment is a procedure for verifying whether the consumer who wishes to pay for the goods/services by using the mobile wallet application 155 is a valid user of the mobile terminal 100 or not.

As shown in FIG. 3, the mobile terminal 100 transmits a payment request including payment information to the merchant server 300 (S310). The payment request transmitted from the mobile terminal 100 to the merchant server 300 in operation S310 includes a terminal ID. The terminal ID may be implemented by using MSISDN, IMEI, CPLC, etc.

Thereafter, the merchant server 300 transmits the payment request received in operation 310 to the payment server 400 (S320). Upon receiving the payment request in operation S320, the payment server 400 transmits a verification request to the verification server 200 (S330). The verification request transmitted from the payment server 400 to the verification server 200 in operation S330 includes the terminal ID. The terminal ID is the terminal ID which is included in the payment request received in operation S320.

Upon receiving the verification request, the verification server 200 requests a Personal Identification Number (PIN) from the mobile wallet application 155 (S340). In response to the request of operation S340, the mobile wallet application 155 receives the PIN from the user and transmits the PIN to the verification server 200 (S350).

Thereafter, the verification server 200 performs a verification procedure by using the PIN received in operation S350, and transmits a result of verifying to the merchant server 300 (S360). The result of the verifying transmitted from the verification server 200 to the merchant server 300 in operation S360 includes the terminal ID. The terminal ID included in the result of the verifying is the terminal ID which is included in the verification request received in operation S330.

The verification server 200 may retain a DB in which terminal IDs and PINs are matched with each other one to one in advance. In operation S360, the verification may be performed by determining whether a PIN matched with the terminal ID included in the verification request received in operation 330 is identical to the PIN received in operation S350 with reference to the DB.

When the result of the verifying received in operation S360 indicates a verification success (when the PIN matched with the terminal ID included in the verification request received in operation S330 is identical to the PIN received in operation S350), the payment server 400 transmits a payment approval to the merchant server 300 in response to the payment request in operation S320 (S370). The payment approval transmitted in operation S370 includes the terminal ID.

Upon receiving the payment approval in operation S370, the merchant server 300 transmits the payment approval to the mobile wallet application 155 (S380).

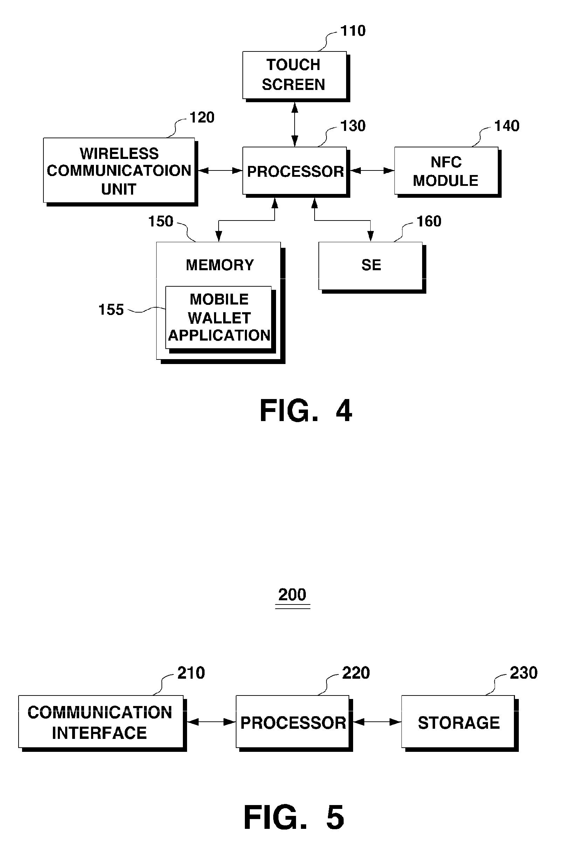

FIG. 4 is a block diagram of the mobile terminal 100 shown in FIG. 1. As shown in FIG. 4, the mobile terminal 100 includes a touch screen 110, a wireless communication unit 120, a processor 130, a Near Field Communication (NFC) module 140, a memory 150, and an SE 160.

The touch screen 110 functions as a display to display visual information (a mobile wallet application execution screen, a PIN input screen, etc. in the above-described exemplary embodiment), and also functions as a user inputting means to receive a user command (a mobile wallet application manipulation, PIN, etc. in the above-described exemplary embodiment).

The wireless communication unit 120 is a means for mobile communication and wireless networking and communicates with the verification server 200 and the merchant server 300 in the above-described exemplary embodiment.

The NFC module 140 is a means for use in an offline payment and transmits mobile payment card information installed in the SE 160 to an NFC reader of a POS.

The memory 150 is a storage medium in which an application (the mobile wallet application in the above-described exemplary embodiment) is installed, and the SE 160 is a storage medium in which a mobile payment card for using the mobile wallet application in a payment of a mobile transaction is installed.

The processor 130 downloads the mobile wallet application and installs it in the memory 150, and executes the installed mobile wallet application. In addition, the processor 130 transmits a purchase use request to the merchant server 300 via the wireless communication unit 120 and transmits a PIN input by the user to the verification server 200 via the wireless communication unit 120.

FIG. 5 is a block diagram of the verification server 200 shown in FIG. 1. As shown in FIG. 5, the verification server 200 includes a communication interface 210, a processor 220, and a storage 230.

The communication interface 210 communicates with the mobile terminal 100, the merchant server 300, and the payment server 400.

The processor 220 is a server for verifying whether the consumer conducting the mobile transaction is a valid consumer or not, and verifying whether the mobile wallet application 155 used in the mobile transaction is validly downloaded and installed.

The storage 230 is a storage medium in which a DB necessary for the verification procedure of the processor 220 is stored. The storage 230 stores a DB in which terminal IDs and tokens are matched with each other one to one, and a DB in which terminal IDs and PINs are matched with each other one to one.

Up to now, the mobile transaction system and method according to various exemplary embodiments has been described.

The above-described exemplary embodiment aims at an online mobile transaction for paying by using a mobile payment means in an online transaction, but can be applied to an offline transaction. In particular, the verification process shown in FIG. 3 can be applied to the offline transaction.

The terminal ID mentioned in the above-described exemplary embodiment is merely an example for convenience of easy understanding and may be substituted with other kinds of IDs.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for a mobile transaction, the method comprising:
receiving, by a server of a third party rather than a merchant and a consumer, a verification request related to the mobile transaction;
verifying, by the server, whether the consumer of the mobile transaction is valid or not; and
transmitting, by the server, a result of the verifying.

2. The method of claim 1, wherein the receiving comprises receiving the verification request from a payment server which processes a payment of the mobile transaction,
wherein the verifying is performed during the payment process of the mobile transaction, and
wherein the transmitting comprises transmitting the result of the verifying to the payment server.

3. The method of claim 1, wherein the verifying comprises:
receiving a PIN which is input by the consumer through a mobile terminal of the consumers; and
verifying whether the consumer is valid or not based on whether the PIN input by the consumer is matched with a PIN registered for the mobile terminal.

4. The method of claim 1, wherein the receiving comprises receiving, from a server of the merchant, a verification request regarding an application which is installed in a mobile terminal of the consumer which will make the payment of the mobile transaction,
where the verifying is performed prior to the mobile transaction being started, and
wherein the transmitting comprises transmitting the result of the verifying to the server of the merchant.

5. The method of claim 4, wherein the verifying comprises verifying whether the application is validly downloaded and installed.

6. The method of claim 5, wherein the verifying comprises verifying whether the application is validly downloaded from the verification server and installed.

7. The method of claim 6, wherein the verifying comprises verifying whether the application is validly downloaded and installed based on whether a token transmitted from the application to the server of the merchant is matched with a token registered for the application.

8. The method of claim 7, wherein the token registered for the application is registered while the application is downloaded and installed.

9. The method of claim 1, wherein the mobile transaction is a transaction to make a payment in an online transaction by using a mobile payment means.

10. A verification server for verifying a mobile transaction, the verification server comprising:
a communication interface configured to receive a verification request related to a mobile transaction; and
a processor configured to verify whether a consumer of the mobile transaction is valid or not and transmit a result of the verifying via the communication interface,
wherein the verification server is managed by a third party rather than a merchant and a consumer.

11. The verification server of claim 10, wherein the verification server is a server which provides a mobile terminal of the consumer with an application used for paying in the mobile transaction.
